# EUROPEAN PATENT APPLICATION

(11) **EP 3 450 234 A1**
(43) Date of publication of application: **06.03.2019**
(21) Application number: 17189390.2
(22) Date of filing: 05.09.2017
(51) Int. Cl.: B60K 1/00, B60K 17/22, B60K 6/20, B60K 6/48

(54) **MINING DUMPER**

(71) Applicant: Sandvik Mining and Construction Oy, 33330 Tampere (FI)
(72) Inventor: LAINE, Mr. Jarkko, 33330 Tampere (FI)
(74) Representative: Sandvik

(57) **Abstract**

A mining dumper (1) comprising a power transmission system (9) for moving the mining dumper (1). The power transmission system comprises at least one electric motor (15) for applying additional power for moving the mining dumper (1) and at least one energy storing device for supplying electric energy to the electric motor (15).

Also a method for intensifying a moving of the mining dumper (1).

## Description

### FIELD OF THE INVENTION

The present invention relates to a mining dumper and a method for intensifying or boosting a moving of the mining dumper.

### BACKGROUND OF THE INVENTION

Mining dumpers may be used in mines to carry blasted rock or other material for example from an excavation position to a further processing.

A working efficiency of the mining dumper, i.e. an amount of the material to be transported in a certain time period by the mining dumper, is a key factor of the mining dumper for an operator of the mine when selecting the mining dumper to be utilized. The working efficiency is a result of an engine power, i.e. a maximum attainable speed of the mining dumper, and a maximum loading capacity of the mining dumper, i.e. a total weight of the mining dumper. Additionally, especially in underground mines, it must be considered also a physical size of the mining dumper due to limited sizes of tunnels and exhaust gas emissions due to a ventilation need for removing the exhaust gas out of the mine.

In this working efficiency a maximum ramp speed attainable is one of the most important features of the mining dumper because of typically very long uphill sections when the excavated material is transported from the excavation position to the further processing. The ramp speed depends on an angle of ascent of the ramp providing a driveway, a mass of the loaded mining dumper and a tractive effort. The tractive effort is limited by a power available from an engine of the mining dumper through other power transmission components to wheels of the mining dumper.

The mining dumpers are typically equipped with a diesel engine, a size of which limits an engine power available. The engine power, and thereby also the maximum ramp speed available, may be increased by choosing a more powerful engine. This, however, increases also a physical size of the engine and also arouses a need to increase a dimensioning of other components in a power transmission system of the mining dumper and may also arouse a need to totally redesign the mining dumper. Also the exhaust gas emissions will be higher. This increases a need of ventilation in the underground mines, which increases a total energy consumption of underground mining.

### BRIEF DESCRIPTION OF THE INVENTION

An object of the present invention is to provide a novel mining dumper.

The invention is characterized by the features of the independent claims.

The invention is based on the idea of including at least one electric motor in a power transmission system of the mining dumper in such a way that the electric motor is connected to the drive shaft so that it applies additional power directly to the drive shaft. The additional power provided by the electric motor thus does not go to the drive shaft through the transmission of the power transmission system but directly from the electric motor to the drive shaft and driving axles.

The electric motor may be operated to provide additional power for the mining dumper especially when the mining dumper is moving uphill, the electric motor thus providing an increase of the speed of the mining dumper in the ramp when the mining dumper is driving uphill for example from an excavation position at a lower part of the mine towards an intermediate storage or a further processing being located at an upper part of the mine when compared to a mining dumper not comprising the power transmission system as disclosed herein. Because the additional power provided by the electric motor is applied directly or straight to the drive shaft and the driving axles, and not through the transmission at all, the transmission is not burdened by the additional power of the electric motor. The transmission thus does not need to be dimensioned to withstand the additional power provided by the electric motor.

Some embodiments of the invention are disclosed in the dependent claims.

### BRIEF DESCRIPTION OF THE DRAWINGS

In the following the invention will be described in greater detail by means of preferred embodiments with reference to the accompanying drawings, in which
Figure 1 shows schematically a side view of a mining dumper;
Figure 2 shows schematically an embodiment of a power transmission system of the mining dumper; and
Figure 3 shows schematically an embodiment of another power transmission system of the mining dumper.

For the sake of clarity, the figures show some embodiments of the invention in a simplified manner. Like reference numerals identify like elements in the figures.

### DETAILED DESCRIPTION OF THE INVENTION

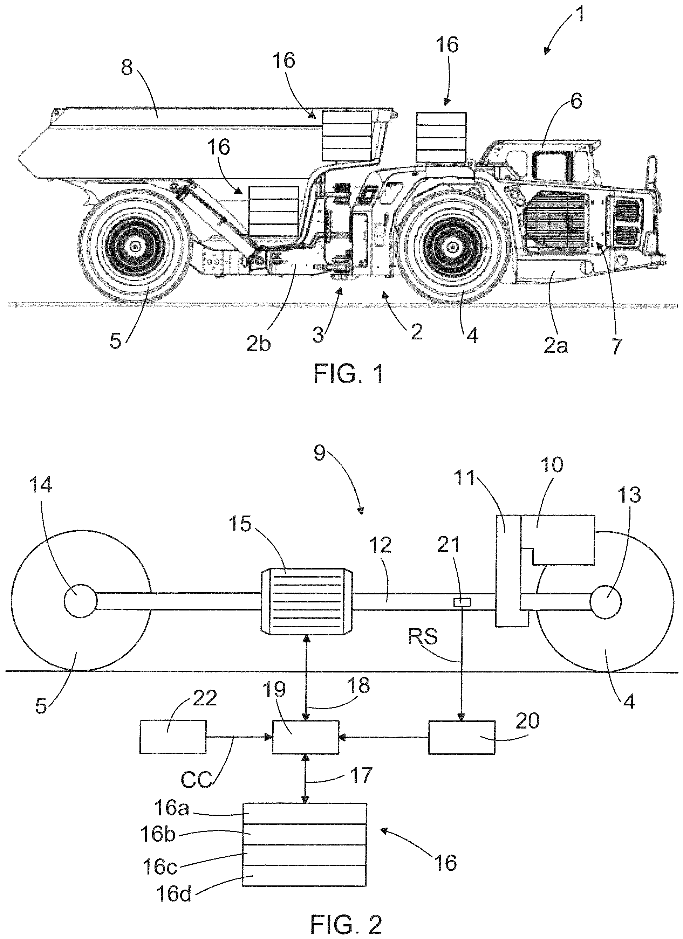

Figure 1 shows schematically a side view of a mining dumper 1. The mining dumper 1 may also be called a mining truck 1. The mining dumper 1 may be used in mines to carry blasted rock or other material for example from an excavation position to an intermediate storage or to a further processing.

The mining dumper 1 of Figure 1 comprises a frame 2. The frame 2 comprises a front frame 2a and a rear frame 2b that are connected to each other with an articulation joint 3 therebetween. The mining dumper 1 of Figure 1 is thus a so called articulated steered mining dumper. The front frame 2a rests on a front axle and front wheels 4 and the rear frame 2b rests on a rear axle and rear wheels 5.

On top of the front frame 2a there is a cabin 6 for an operator of the dumper 1. If the mining dumper is an autonomously operated mining dumper, or if the mining dumper is a semi-autonomously operated mining dumper, which is operated through a remote access, the cabin 6 may be omitted.

On a top part of the front chassis 2a there is also an engine compartment 7 for a combustion engine of the dumper 1. The combustion engine is typically a diesel engine. In a mining dumper with a 63 tons payload there is a diesel engine with a 16 litres capacity having a maximum power output of 565 kW.

On a top of the rear frame 2b there is a dump box 8 as well as necessary means for tipping the dump box 8 for unloading the mining dumper 1.

Figure 1 and the related description above discloses only one example of the mining dumper 1 where the power transmission system solution presented herein may be utilized. The appearance of the mining dumper 1 may thus deviate from that disclosed in Figure 1 and the related description above.

Figure 2 shows schematically a side view of an embodiment of a power transmission system 9 of the mining dumper 1. The power transmission system 9 comprises a combustion engine 10, such as a diesel engine, a transmission 11, a drive shaft 12, a front driving axle 13 and a rear driving axle 14. The transmission 11 is arranged to transmit the power provided by the combustion engine 10 to the drive shaft 12. The drive shaft 12, in turn, is arranged to transmit the power to the front driving axle 13 for driving the front wheels 4 and to the rear driving axle 14 for driving the rear wheels 5. The number of the driving axles may vary depending on the actual embodiment of the mining dumper. Different differential gears that are typically needed in power transmission systems and that are generally known by a person skilled in the art, are omitted from Figure 2 for the sake of clarity.

The power transmission system 9 further comprises an electric motor 15. The electric motor 15 is connected to the drive shaft 12 for applying additional power to the drive shaft 12. The electric motor 15 is connected to the drive shaft 12 in such a way that the additional power provided by the electric motor 15 is applied directly or straight to the drive shaft 12, whereby the additional power provided by the electric motor 15 does not go to the drive shaft 12 through the transmission 11. The electric motor 15 may for example be a permanent magnet motor.

In the embodiment of Figure 2 the electric motor 15 is arranged to surround the drive shaft 12. The drive shaft 12 is connected to a rotor of the electric motor 15 in such a way that the drive shaft 12 is arranged to go through the electric motor 15 and to provide an axis of the electric motor 15. When the electric energy is applied to the electric motor 15, the rotor of the electric motor 15 rotates and transmits the additional power provided by the electric motor 15 to the drive shaft 12.

In another possible embodiment the electric motor 15 comprises an axis of its own and a gearwheel attached to that axis. The drive shaft 12, in turn, comprises another gearwheel which is arranged in connection with the gearwheel in the axis of the electric motor 15 so as to transmit the additional power provided by the electric motor 15 to the drive shaft 12. In other words it may be said that there is a gear transmission between the electric motor 15 and the drive shaft 12.

The power transmission system 9 further comprises a battery pack 16 for supplying electric energy to the electric motor 15. Between the electric motor 15 and the battery pack 16 there is a current director element 19 that is used in controlling the operation of the electric motor 15. The battery pack 16 is connected to the current director element 19 with the first electric power line 17 and the current director element 19 is connected to the electric motor 15 with the second electric power line 18.

The battery pack 16 comprises a number of rechargeable batteries. In the battery pack 16 of Figure 1 there are four rechargeable batteries 16a, 16b, 16c, 16d but in its minimum the battery pack 16 may comprise only one rechargeable battery 16a.

The current director element 19 may be an inverter device, i.e. an inverter, that comprises inverter means for converting direct current supplied by the battery pack 16 to alternating current suitable for operating the electric motor 15 as well as rectifier means for converting alternating current to direct current suitable for recharging the rechargeable batteries 16a, 16b, 16c, 16d in the battery pack 16.

The battery pack 16 provides one kind of an energy storing device for supplying electric energy to the electric motor 15. Other kind of energy storing devices, such as supercapasitors, may also be utilized.

The mining dumper 1 further comprises a control unit 20. The control unit 20 is connected to the current director element 19. The control unit 20 is intended to control the operation of the current director element 19, whereby the control unit 20 may be used to control the operation of the electric motor 15 by controlling the operation of the current director element 19. The control unit 20 may also be an integral part of the current director element 19 or the current director element 19 may be an integral part of the control unit 20.

The electric motor 15 is intended to be operated for providing additional power for the mining dumper especially when the mining dumper is moving uphill, whereby a ramp speed of the mining dumper 1 can be increased when compared to a mining dumper not comprising the power transmission system as disclosed herein. To be more precise, the electric motor 15 is intended to provide additional torque that is applied directly or straight to the drive shaft 12 without substantially affecting on the rotation speed of the drive shaft 12. Due to this additional torque a driving speed of the mining dumper 1 does not decrease from a driving speed of a flat country as much as it does with mining dumpers not comprising the power transmission system as disclosed herein, when the mining dumper 1 is driving uphill. The amount of the decrease in the driving speed of the mining dumper 1 is dependent on the maximum power output available from the electric motor 15 and an amount of the power output that is provided from the electric motor 15 in each case is not necessarily the same as the maximum power output of the electric motor 15.

The control unit 20 may be configured to start the operation of the electric motor 15 automatically in response to the mining dumper 1 entering to the ramp or the uphill section. Entering of the mining dumper 1 to the ramp or uphill section may for example be detected by an acceleration sensor or inclination sensor. Alternatively the operator of the mining dumper 1 may start the operation of the electric motor 15 when the mining dumper 1 enters to the ramp or the uphill section.

The additional power provided by the electric motor 15 may also be utilized during accelerations of the mining dumper 1, such as during starting of the loaded mining dumper 1.

Because the additional power provided by the electric motor 15 is applied directly or straight to the drive shaft 12, and not through the transmission 11 at all, the transmission 11 is not burdened by the additional power of the electric motor 15. The transmission 11 may thus be substantially maintained as it is, only slight modification in connection between the transmission 11 and the drive shaft 12 may be needed if the drive shaft 12 currently available is not dimensioned to withstand the additional torque provided by the electric motor 15 and must therefore be replaced. Similarly, the driving axles 13, 14 as well as their connections to the drive shaft 12 and to the wheels 4, 5 must be replaced only if they are not dimensioned to withstand the additional torque provided by the electric motor 15. The combustion engine 10, the transmission 11 and the general structure of the power transmission system 9 may thus be maintained as they are. The additional power to the mining dumper 1 is also provided in a form which does not increase exhaust gas emissions in the mine.

In the following the operation of different embodiments are further investigated in more detail.

According to an embodiment the operation of the electric motor 15 is controlled by the current director element 19 for example on a basis of a torque control principle. Other control methods are applicable also. The inverter and power electronics thereon can utilize conventional control methods of the electric motor depending on the motor type. These control methods have not been disclosed herein in more detail because they are generally known for a person skilled in the art of electric motor control techniques.

According to an embodiment the mining dumper 1 comprises at least one sensor 21 for measuring a rotational speed RS of the drive shaft 12. The measured rotational speed RS of the drive shaft 12 is received by the control unit 20 and forwarded by the control unit 20 to the current director element 19, unless the measured rotational speed RS of the drive shaft 12 is not transmitted directly to the current director element 19. The current director element 19 controls the operation of the electric motor 15 on the basis of the measured rotational speed RS and a given reference received from a control system of the mining dumper 1 so that the electric motor 15 may apply to the drive shaft 12 the needed torque to provide better performance. In this embodiment the control principle of the current director element 19 may be based for example on the Pulse Width Modulation (PWM) control technique or on a vector control technique. These control techniques are substantially known for a person skilled in the art of electric motor controls and are not disclosed herein in more detail.

Referring back to the above mentioned mining dumper of 63 tons payload and having an engine with the maximum power output of 565 kW, the electric motor 15 may for example be a permanent magnet motor of 200 kW. In an uphill having an angle of ascent 1:7 the combustion engine provides a speed of about 9,5 km/h with a full load. The rotational speed of the drive shaft is then about 1000 rpm. With this rotational speed of the drive shaft the maximum torque of the electric motor is about 1700 Nm, the output power of the electric motor being at this operating point about 180 kW. This additional power raises the speed of the mining dumper in the uphill driving from that of about 9,5 km/h to about 13,5 km/h in the uphill having the angle of ascent of 1:7 with the full load. With this speed increase a driving time in 4000 metres long uphill is reduced by seven and half minutes. This means about 10% increase in a total hoisting capacity although it has also been taken into account that the maximum load capacity of the dumper has to be reduced from 63 tons to 60 tons because of the additional weight and space requirement of the battery pack 16.

In order the electric motor 15 being able to apply additional power for moving the mining dumper 1, there must of course be electrical power available in the battery pack 16. It can be considered at least the following alternatives for ensuring, that there is electrical power available in the battery pack 16.

According to an embodiment the entire battery pack 16 or a number of rechargeable batteries 16a, 16b, 16c, 16d in the battery pack 16 not containing any or enough charging is replaced with another battery pack or another rechargeable batteries 16a, 16b, 16c, 16d that are full of charging. In this case the rechargeable batteries 16a, 16b, 16c, 16d in the battery pack 16 can be recharged in a recharging station that is separate from the mining dumper 1. The replacement of the rechargeable batteries 16a, 16b, 16c, 16d being out of charging may be carried out for example during loading the mining dumper 1 or before or after it.

According to an alternative embodiment the electric motor 15 is arranged to be operated as a generator for recharging the at least one rechargeable battery 16a, 16b, 16c, 16d during an engine braking of the mining dumper 1. This embodiment allows the rechargeable batteries 16a, 16b, 16c, 16d to be recharged when the mining dumper 1 is for example moving downhill back towards the excavating position after carrying the load uphill to the intermediate storage or to the further processing. The electric motor 15 is thus utilized to recapture energy with regenerative braking.

According to another alternative embodiment the mining dumper 1 comprises at least one charging circuit 22 connectable to an electric power source external to the mining dumper 1 for recharging the at least one rechargeable battery 16a, 16b, 16c, 16d in the battery pack 16. If the external electric power source is an alternating current source, a charging current CC provided by the charging circuit 22 may be supplied to the rechargeable batteries 16a, 16b, 16c, 16d in the battery pack 16 through the current direction element 19.

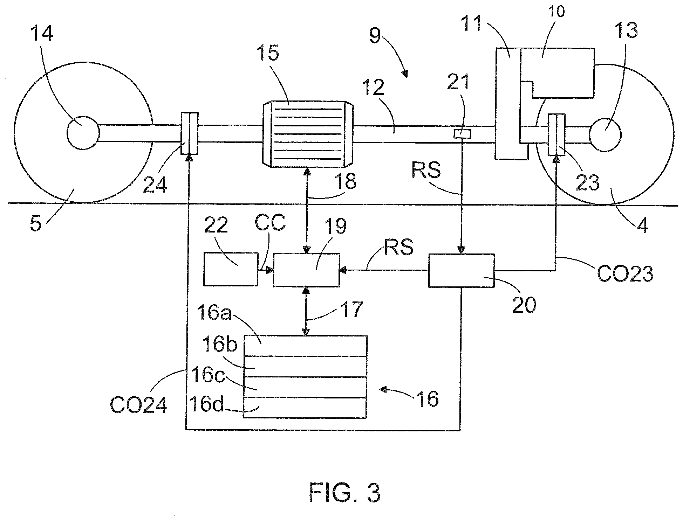

In a further alternative embodiment of the mining dumper 1, as disclosed in Figure 3 showing schematically an embodiment of another power transmission system 9 of the mining dumper 1, the power transmission system 9 of the mining dumper 1 further comprises a front disengaging clutch 23 and a rear disengaging clutch 24. The front disengaging clutch 23 is mounted in the drive shaft 12 between the electric motor 15 and the front driving axle 13. The rear disengaging clutch 24 is mounted in the drive shaft 12 between the electric motor 15 and the rear driving axle 14. The front disengaging clutch 23 and the rear disengaging clutch 24 are arranged to disconnect the combustion engine 10, the transmission 11 and a part of the drive shaft 12 being in connection with the electric motor 15 from the front driving axle 13 and the rear driving axle 14. This disconnection is provided by opening the front disengaging clutch 23 and the rear disengaging clutch 24 in response to a respective control command provided by the control unit 20 through respective control channels CO23 and CO24. This disconnection may for example be performed during an idle running of the mining dumper 1, whereby the combustion engine 10 may be arranged to operate through the transmission and the drive shaft the electric motor to operate as a generator for recharging the at least one rechargeable battery 16a, 16b, 16c, 16d in the battery pack 16 during an idle running of the mining dumper 1.

At least some of the different embodiments disclosed above for recharging the rechargeable batteries may also be combined with each other in a single mining dumper.

The number of the rechargeable batteries in the battery pack 16 may be arranged to be scalable relative to an intended increase and duration of additional power provided by the electric motor. In the example disclosed in the Figures the battery pack 16 comprises four rechargeable batteries 16a, 16b, 16c, 16d which may or may not have the same storage capacity. A combination of a number of rechargeable batteries having same or different storage capacity is selected depending on the intended increase and duration of additional power provided by the electric motor 15.

According to an embodiment a single rechargeable battery 16a, 16b, 16c, 16d may have a storage capacity of 24 kWh. With a battery pack comprising two rechargeable batteries with the storage capacity of 24 kWh each the 200 kW electric motor is able to provide additional power for about 11 minutes with full power and about 23 minutes with half power. With a battery pack comprising four rechargeable batteries with the storage capacity of 24 kWh the 200 kW electric motor is able to provide additional power for about 23 minutes with full power, which is enough for 5000 metres long uphill with the angle of ascent of 1:7.

The battery pack 16 may be arranged in the mining dumper 1 at various positions, as schematically disclosed in Figure 1. One possible position for the battery pack 16 is on top of the front frame 2a behind the engine compartment 7. A second possible position for the battery pack 16 may be next to the top part of the dump box 8 at a front part of the dump box 8. A third possible position for the battery pack 16 may be on top of the rear frame 2b underneath the dump box 8. In the two latter cases the dump box 8 must probably be redesigned so as to locate the battery pack 16 close to the dump box 8.

It will be obvious to a person skilled in the art that, as the technology advances, the inventive concept can be implemented in various ways. The invention and its embodiments are not limited to the examples described above but may vary within the scope of the claims.

## Claims

1. A mining dumper (1) comprising a power transmission system (9) for moving the mining dumper (1), the power transmission system comprising a combustion engine (10), a transmission (11), a drive shaft (12) and at least one driving axle (13, 14), wherein the transmission (11) is arranged to transmit power provided by the combustion engine (10) to the drive shaft (12) and the drive shaft (12) is arranged to transmit the power to the at least one driving axle (13, 14) for moving the mining dumper (1), and wherein the power transmission system (9) of the mining dumper (1) further comprises at least one electric motor (15) connected to the drive shaft (12) for applying additional power directly to the drive shaft (12) and at least one energy storing device for supplying electric energy to the electric motor (15).

2. A mining dumper as claimed in claim 1, **characterized in that** the electric motor (15) is arranged to surround the drive shaft (12) and the drive shaft (12) is connected to a rotor of the electric motor (15) in such a way that the drive shaft (12) is arranged to provide an axis of the electric motor (15).

3. A mining dumper as claimed in claim 1 or 2, **characterized in that** the mining dumper (1) comprises at least one control unit (20) for controlling an operation of the electric motor (15).

4. A mining dumper as claimed in any one of the preceding claims, **characterized in that** the mining dumper (1) comprises at least one sensor (21) for measuring a rotation speed (RS) of the drive shaft (12) and that the electric motor (15) is controlled to output an increase in torque at the measured rotation speed (RS) of the drive shaft (12).

5. A mining dumper as claimed in any one of preceding claims, **characterized in that** the electric motor (15) is controlled to apply the additional power to the drive shaft (12) at least for assisting the moving of the mining dumper (1) uphill.

6. A mining dumper as claimed in any one of the preceding claims, **characterized in that** the electric motor (15) is arranged to be operated as a generator for recharging the at least one energy storing device during an engine braking of the mining dumper (1).

7. A mining dumper as claimed in any one of the preceding claims, **characterized in that** the mining dumper (1) comprises at least one charging circuit (22) connectable to an electric power source external to the mining dumper (1) for recharging the at least one energy storing device.

8. A mining dumper as claimed in any one of the preceding claims, **characterized in that** the mining dumper (1) comprises at least one disengaging clutch (23, 24) for disconnecting the drive shaft (12) from the at least one driving axle (13, 14).

9. A mining dumper as claimed in claim 8, **characterized in that** the at least one disengaging clutch (23, 24) is arranged to be opened for disconnecting the drive shaft (12) from each driving axle (13, 14) and that the combustion engine (10) is arranged to operate through the transmission (11) and the drive shaft (12) the electric motor (15) to operate as a generator for recharging the at least one energy storing device during an idle running of the mining dumper (1).

10. A mining dumper as claimed in any one of the preceding claims, **characterized in that** the at least one energy storing device comprises at least one battery back (16) comprising at least one rechargeable battery (16a, 16b, 16c, 16d).

11. A mining dumper as claimed in claim 10, **characterized in that** a number of the rechargeable batteries (16a, 16b, 16c, 16d) in the battery pack (16) is scalable relative to an intended increase and duration of additional power to be provided by the electric motor (15).

12. A method for intensifying a moving of a mining dumper (1), the method comprising
transmitting, by a transmission (11) of the mining dumper (1) power provided by a combustion engine (10) of the mining dumper (1) to a drive shaft (12) of the mining dumper (1) and by the drive shaft (12) to at least one driving axle (13, 14) of the mining dumper (1) for moving the mining dumper (1), and
applying additional power directly to the drive shaft (12) by at least one electric motor (15) connected to the drive shaft (12) for intensifying the moving of the mining dumper (1).

13. A method as claimed in claim 12, **characterized by** the electric motor (15) being arranged to surround the drive shaft (12) and the drive shaft (12) being connected to a rotor of the electric motor (15) in such a way that the drive shaft (12) is arranged to provide an axis of the electric motor (15).

14. A method as claimed in claim 12 or 13, **characterized by** controlling the operation of the electric motor with at least one control unit (20) on the basis of a torque control principle by measuring a rotation speed (RS) of the drive shaft (12) and controlling the electric motor (15) to output an increase in torque at the measured rotation speed (RS) of the drive shaft (12).

15. A method as claimed in any one of preceding claims 12 to 14, **characterized by** recharging at least one rechargeable battery (16a, 16b, 16c, 16d) in a battery pack (16) by using the electric motor (15) as a generator during an engine braking of the mining dumper (1).
